Europäisches Patentamt

European Patent Office

Office européen des brevets

(11) Veröffentlichungsnummer: **0 326 847**
**A2**

(12) **EUROPÄISCHE PATENTANMELDUNG**

(21) Anmeldenummer: 89100713.0

(22) Anmeldetag: 17.01.89

(51) Int. Cl.⁴: **G02B 6/10 , G02B 6/44**

(30) Priorität: 05.02.88 DE 3803413

(43) Veröffentlichungstag der Anmeldung:
09.08.89 Patentblatt 89/32

(84) Benannte Vertragsstaaten:
**DE FR GB SE**

(71) Anmelder: **HERAEUS QUARZSCHMELZE GMBH**
**Quarzstrasse**
**D-6450 Hanau(DE)**

(72) Erfinder: **Klein, Karl Friedrich, Dr.**
**Bogenstrasse 22**
**D-6454 Bruchköbel(DE)**
Erfinder: **Heitmann, Walter, Dr.**
**Freiherr-von-Stein-Strasse 41**
**D-6101 Gross-Bieberau(DE)**

(74) Vertreter: **Heinen, Gerhard, Dr.**
**Heraeus Holding GmbH Zentralbereich**
**Patente und Lizenzen Heraeusstrasse 12-14**
**D-6450 Hanau am Main(DE)**

(54) Übertragungsstrecke für optische Strahlung und deren Anwendungen.

(57) Es wird eine Übertragungsstrecke für optische Strahlung offenbart mit wenigstens einer optischen Faser mit Kern und Mantel. Der Kern besteht aus glasigem, synthetischem Siliziumdioxid, der Mantel aus mit Boroxid und/oder Fluor dotiertem glasigen, synthetischem Siliziumdioxid. Die Faser ist im wesentlichen über ihre gesamte Länge auf eine Temperatur unterhalb 220 k zur Übertragung optischer Strahlung im Wellenlängenbereich von 160 bis 300 nm gekühlt. Derartige Übertragungsstrecken werden in der Spektroskopie, auf den Gebieten der Materialbearbeitung, der Medizin und der chemischen Prozeßtechnik sowie für biologische Zwecke eingsetzt.

## Übertragungsstrecke für optische Strahlung und deren Anwendungen

Die Erfindung bezieht sich auf eine Übertragungsstrecke für optische Strahlung, die wenigstens eine optische Faser aufweist, deren Kern aus glasigem, synthetischem Siliziumdioxid hoher Reinheit in Bezug auf Metallionen-Verunreinigungen und deren Mantel aus glasigem, mit Boroxid und/oder Fluor dotiertem, synthetischem Siliziumdioxid besteht.

Außerdem bezieht sich die Erfindung auf Anwendungen derartiger Übertragungsstrecken.

Aus der DE-PS 25 36 457 ist ein Verfahren zur Herstellung von synthetischem, OH-Ionen-freiem mit Fluor dotiertem Quarzglas bekannt, das als Mantelwerkstoff für optische Fasern mit einem Kern aus synthetischem Quarzglas dient.

Aus der FR-OS 22 08 127 sind optische Fasern bekannt mit einem Kern aus reinem Siliziumdioxid und einem Mantel, der aus mit Boroxid oder Fluor dotiertem Siliziumdioxid besteht.

Schließlich sind aus der EP-OS 0 173 183 optische Fasern bekannt mit einem Kern aus reinem, synthetischem OH-haltigem Quarzglas und einem Mantel aus mit Fluor und Boroxid dotiertem Quarzglas.

Optische Fasern der vorbekannten Art eignen sich gut in einer Übertragungsstrecke für optische Strahlung, wenn die optische Strahlung in einem Wellenlängenbereich oberhalb 300 nm liegt. Es wurde festgestellt, daß die bekannten optischen Fasern sich weniger für Übertragungsstrecke mit Längen über 10 m eignen, wenn die Wellenlänge der zu übertragenden optischen Strahlung weniger als 300 nm beträgt, also im kurzwelligen ultravioletten Spektralbereich liegt. Für Wellenlängen unterhalb 300 nm setzt eine merkliche Absorption der optischen Strahlung ein, die sich mit abnehmender Wellenlänge noch verstärkt. Für Wellenlängen unterhalb von etwa 190 nm werden die bekannten optischen Fasern praktisch undurchlässig, wenn sie in einer Übertragungsstrecke eingesetzt werden, die einige Meter lang ist.

Die Erfindung hat sich daher die Aufgabe gestellt, eine Übertragungsstrecke für optische Strahlung mit Wellenlängen im Bereich von etwa 160 bis 300 nm bereitzustellen.

Gelöst wird diese Aufgabe für eine Übertragungsstrecke der eingangs charakterisierten Art erfindungsgemäß dadurch, daß zur Übertragung von optischer Strahlung mit einer Wellenlänge im Bereich von etwa 160 bis 300 nm die optische Faser im wesentlichen über ihre gesamte Länge auf eine Temperatur unterhalb von 220 K gekühlt ist. Diese Maßnahme hat überraschenderweise zur Folge, daß die Transmission auf den doppelten Wert bis über 10-fachen Wert im Vergleich zur ungekühlten Faser ansteigt. Außerdem wurde beobachtet, daß die Absorptionskante der erfindungsgemäßen Übertragungsstrecke zu kürzeren Wellenlängen verschoben ist, so daß es möglich ist, Strahlung kürzerer Wellenlänge als bisher zu übertragen als mit optischen Fasern, die sich auf Zimmertemperatur befinden. Die Verminderung der Absorption des Fasermaterials durch Kühlung bewirkt nicht nur eine Erhöhung der Transmission. Durch die geringere Aufheizung wird auch der Schwellwert für die thermische Zerstörung der Faser erhöht.

Die optische Faser ist vorteilhafterweise mit einer Hülle aus wärmeisolierendem Werkstoff umschlossen. In einer vorteilhaften Ausführungsform ist die Hülle als Kühlmantel ausgebildet und sie besitzt einen Anschluß für die Zufuhr und einen Anschluß für die Ableitung eines Kühlmittels. Vorzugsweise wird die optische Faser mit flüssigem Stickstoff gekühlt, der durch den Kühlmantel hindurchgeleitet wird.

Am Austrittsende der optischen Strahlung aus der Faser ist vorteilhafterweise ein kurzes Faserstück ungekühlt aus der Hülle herausgeführt. Hierdurch wird die Beweglichkeit des Ankoppelns der Übertragungsstrecke am Einsatzort verbessert.

Die Erfindung hat sich nicht nur bewährt für optische Fasern mit einem Kern aus glasigem synthetischem Siliziumdioxid und einem Mantel aus glasigem, mit Boroxid und/oder Fluor dotiertem synthetischen Siliziumdioxid, sondern auch für solche optische Fasern, bei denen der Kern aus glasigem, synthetischem, dotiertem Siliziumdioxid besteht, wobei die Dotiermittel die Ultraviolett-Absorption nicht oder nur geringfügig beeinflussen. Als derartige Dotiermittel kommen beispielsweise Fluor, Boroxid und/oder Aluminiumoxid in Frage.

Bevorzugte Verwendung findet eine erfindungsgemäße Übertragungsstrecke überall dort, wo hohe UV-Lichtleistungen von einer Lichtquelle, wie Gasentladungslampe oder Laser, zu einem Einsatzort geleitet werden sollen, also bei der Materialbearbeitung, für medizinische und biologische Anwendungen und für chemische Prozesse. Die Übertragung der UV-Strahlung durch eine Lichtleitung bietet folgende Vorteile: Das Gefahrenpotential der Lichtquelle kann reduziert werden und es können mehrere Einsatzorte von einer Quelle aus versorgt werden.

Auch in der Spektroskopie zur Verbindung eines Spektrometers mit einem Detektor ist der Einsatz von Vorteil. Durch die erfindungsgemäße Übertragungsstrecke können hier Messungen bei solchen Wellenlängen durchgeführt werden, bei denen ungekühlte Übertragungsstrecken versagen.

Als bevorzugte Beispiele für die Anwendung erfindungsgemäßer Übertragungsstrecken seien folgende genannt:

Auf dem Gebiet der Materialbearbeitung kann die erfindungsgemäße Übertragungsstrecke zum Verdampfen von Teilen eines Kunststoff-Films, der zur Passivierung auf einen integrierten Schaltkreis aufgebracht wurde, mittels gepulster, kurzwelliger Ultraviolett-Strahlung eines Excimer-Lasers verwendet werden. Auch für die Herstellung sehr feiner Strukturen in der Halbleitertechnik mittels photochemischer Reaktionen in ultraviolett-empfindlicher Lackschichten ist die erfindungsgemäße Übertragungsstrecke einsetzbar.

In der Medizin ist die erfindungsgemäße Übertragungsstrecke in der Augenheilkunde einsetzbar, beispielsweise um feinste Schnitte zur Formkorrektur der Hornhaut des Auges mittels kurzwelliger ultravioletter-Laserstrahlung durchzuführen. Auch die Behandlung der Schuppenflechte (Psoriasis) mit ultravioletter Strahlung mit einer Wellenlänge im Bereich von 270 nm bis 300 nm ist als Anwendungsbeispiel für die erfindungsgemäße Übertragungsstrecke zu nennen.

Auf biologischem Gebiet könnte die erfindungsgemäße Übertragungsstrecke zur Luft- und Flächenentkeimung mittels ultravioletter Strahlung im Wellenlängenbereich zwischen 250 nm und 300 nm eingesetzt werden.

Schließlich sei noch als Beispiel für den Einsatz der erfindungsgemäßen Übertragungsstrecke in der chemischen Prozeßtechnik die Herstellung von dielektrischen Isolier- oder Passivierungsschichten aus Siliziumdioxid in der Halbleitertechnik durch Niederschlagen aus der Gasphase genannt, wobei die Reaktionen der gas- bzw. dampfförmigen Stoffe durch photochemische Prozesse mittels ultravioletter Strahlung ausgelöst werden. Die Siliziumdioxidschichten lassen sich so bei relativ niedrigen Substrattemperaturen bis zu 50 °C abscheiden.

Es hat sich ergeben, daß bei einer erfindungsgemäßen Übertragungsstrecke, wenn sie mit flüssigem Stickstoff auf einen Wert von 77 K gekühlt wird, sich die Absorptionskante der optischen Faser um etwa 3 bis 5 nm zu kürzeren Wellenlängen hin verschiebt. Dies entspricht bei 170 nm einer Verminderung des Absorptionskoeffizienten von 0,5 $cm^{-1}$ auf etwa 0,2 $cm^{-1}$. Bei einer erfindungsgemäßen Übertragungsstrecke von 10 cm Länge wird dadurch die Transmission von 0,7 % auf 14 % bei 170 nm ansteigen. Für Strahlung einer Wellenlänge von 193 nm, die von einem Excimer-Laser emittiert wird, ergibt sich für eine Länge der erfindungsgemäßen Übertragungsstrecke von 1 m praktisch eine Verdoppelung der Transmission bei einer Kühlung auf 77 K. Es hat sich gezeigt, daß sich bei optischer Strahlung bei Wellenlängen im Bereich von 200 bis 300 nm die erfindungsgemäße Übertragungsstrecke noch eine merkliche Verbesserung der Transmission ergibt, insbesondere wenn die Übertragungsstreckenlängen 15 m und mehr betragen.

In den Figuren sind Ausführungsbeispiele der Erfindung dargestellt. Es zeigen:

Figur 1 schematisch eine erfindungsgemäße Übertragungsstrecke mit einer mit Kühlmantel zum Durchleiten eines Kühlmittels versehenen optischen Faser,

Figur 2 einen Querschnitt durch die Faser entlang der Linie AB von Figur 1,

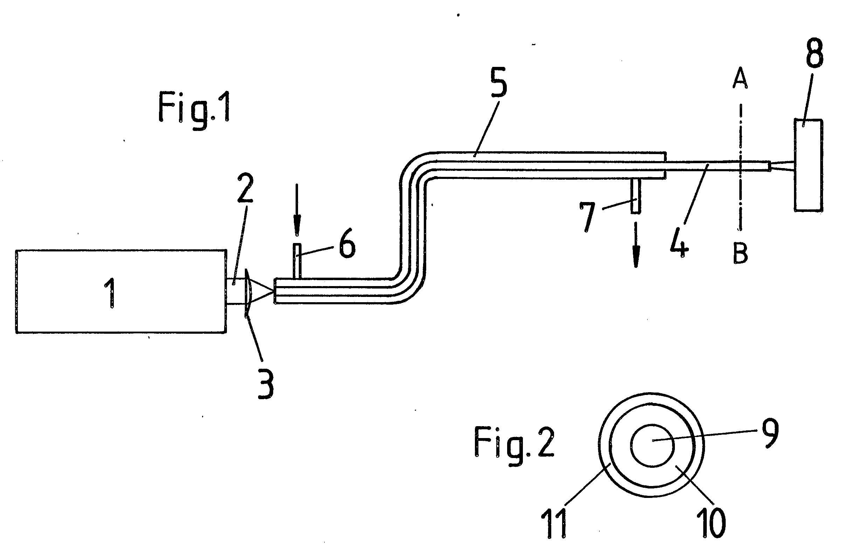

Wie aus Figur 1 zu entnehmen ist, wird von einer Strahlungsquelle 1 ein Bündel 2 der zu übertragenden optischen Strahlung mittels einer Quarzglaslinse 3 in das eine Ende der optischen Faser 4 eingespeist und am anderen Ende auf ein zu bestrahlendes Objekt 8 abgegeben. Die optische Faser ist von einer Hülle 5 aus wärmeisolierendem Werkstoff umgeben, die in diesem Ausführungsbeispiel als Kühlmantel ausgebildet ist, der mit einem Zufuhrstutzen 6 und einem Abflußstutzen 7 für das Kühlmittel versehen ist. Wie aus der Figur ersichtlich, ist nicht die optische Faser über ihre Gesamtlänge von dem Kühlmantel umschlossen, sondern sie ist an dem die optische Strahlung abgebenden Ende, das dem zu bestrahlendem Objekt 8 benachbart ist, ungekühlt. Die optische Faser besteht, wie aus Figur 2 ersichtlich ist, aus einem Kern 9, einem Mantel 10 und einer Kunststoffhülle 11. Der Kern 9 besteht aus glasigem, synthetischem Siliziumdioxid hoher Reinheit in Bezug auf Metallionen-Verunreinigungen. Der Mantel besteht in dem Ausführungsbeispiel aus Fluor-dotiertem, synthetischem Siliziumdioxid. Durch die Kunststoffhülle werden Mikroknickverluste der Faser und Beschädigungen der Faseroberfläche vermieden. In dem Ausführungsbeispiel beträgt der Durchmesser des Kerns 9 der optischen Faser 500 μm; übliche Kerndurchmesser liegen im Bereich von 2 bis 1000 μm. Die Dicke des Mantels 10 beträgt 20 μm; üblicherweise liegt die Manteldicke im Bereich von 10 bis 50 μm. Die Dicke der Kunststoffhülle 11 betrug in dem Ausführungsbeispiel 5 μm; übliche Dicken liegen im Bereich von 5 bis 100 μm. Die Länge der Übertragungsstrecke ist wellenlängenabhängig. Für sehr kurze Wellenlängen, also im Bereich unterhalb von 200 nm, beträgt die Länge der Übertragungsstrecke etwa 0,5 m bis 3 m. Im Bereich von 200 bis 300 nm kann die Übertragungsstrecke mehr als 15 m betragen.

## Ansprüche

1. Übertragungsstrecke für optische Strahlung, die wenigtens eine optische Faser aufweist, deren Kern aus glasigem, synthetischem Siliziumdioxid hoher Reinheit in Bezug auf Metallionen-Verunreinigungen und deren Mantel aus glasigem, mit Boroxid und/oder Fluor dotiertem, synthetischem Siliziumdioxid besteht, dadurch gekennzeichnet, daß zur Übertragung von optischer Strahlung mit einer Wellenlänge im Bereich von etwa 160 bis 300 nm die optische Faser im wesentlichen über ihre gesamte Länge auf eine Temperatur unterhalb von 220 K gekühlt ist.

2. Übertragungsstrecke nach Anspruch 1, dadurch gekennzeichnet, daß die optische Faser von einer Hülle aus wärmeisolierendem Werkstoff umschlossen ist.

3. Übertragungsstrecke nach Anspruch 2, dadurch gekennzeichnet, daß die Hülle als Kühlmantel ausgebildet ist und einen Anschluß für die Zufuhr eines Kühlmittels und einen Anschluß für die Ableitung des Kühlmittels aufweist.

4. Übertragngsstrecke nach den Ansprüchen 1 bis 3, dadurch gekennzeichnet, daß die optische Faser mit flüssigem Stickstoff gekühlt ist. Übertragungsstrecke nach einem oder mehreren der vorhergehenden Ansprüche, dadurch gekennzeichnet, daß ein gegenüber der Gesamtlänge der optischen Faser kurzes Faserstück an ihrem die optische Strahlung abgebenden Ende ungekühlt ist.

6. Übertragungsstrecke nach einem oder mehreren der vorhergehenden Ansprüche, dadurch gekennzeichnet, daß der Kern der optischen Faser aus glasigem, synthetischem, dotiertem Siliziumdioxid besteht, wobei die Dotiermittel die Ultraviolett-Absorption nicht oder nur geringfügig beeinflussen.

7. Anwendung einer Übertragungsstrecke nach einem oder mehreren der vorhergehenden Ansprüche in der Spektroskopie zur Verbindung eines Spektrometers mit einem Detektor.

8. Anwendung einer Übertagungsstrecke nach einem oder mehreren der vorhergehenden Ansprüche 1 bis 6 zur Übertragung höher UV-Lichtleistungen für die Materialbearbeitung, für medizinische oder biologische Anwendungen oder für Prozeßtechnik.

Fig.1

Fig.2